# EUROPÄISCHE PATENTANMELDUNG

(11) **EP 1 188 937 A2**
(43) Veröffentlichungstag der Anmeldung: **20.03.2002**
(21) Anmeldenummer: 01121907.8
(22) Anmeldetag: 12.09.2001
(51) Int. Cl.: F16B 23/00, B21K 1/56

(54) **Aussensechsrundschraube und Verfahren zu deren Herstellung**

(30) Priorität: 19.09.2000 DE 10046562
(71) Anmelder: Eska Sächsische Schraubenwerke GmbH, 09126 Chemnitz (DE)
(72) Erfinder: Siegel, Holger, 09112 Chemnitz (DE); Weigel, Dierk, 09221 Neukirchen - OT Adorf (DE)
(74) Vertreter: Rumrich, Gabriele

(57) **Zusammenfassung**

Die Erfindung betrifft eine Außensechsrundschraube und ein Verfahren zu deren Herstellung. Der Schraubenkopf ist dabei im Wesentlichen in der Art eines Torx-Kopfes ausgebildet, mit einer den Kraftangriff gewährleistenden Außensechsrundkontur (5) und einem Flansch (4) mit einer im Winkel (∝) in Richtung zur Außensechsrunkontur (5) reichenden Schräge (4.1). Erfindungsgemäß schließt sich die Schräge (4.1) des Flansches (4) direkt an die Außensechsrundkontur (5) an, so daß die Gesamtkopfhöhe (k) des Kopfes (3) wesentlich verringert ist, wobei gleichzeitig die Höhe (t₁) der Außensechsrundkontur (5) einen zuverlässigen Kraftangriff gewährleistet. Verfahrensgemäß erfolgt die Fertigstellung des Flansches (4) und der Außensechsrundkontur (5) entweder durch Anschaben mittels eines Anschabewerkzeuges oder durch Aufstauchen und Formpressen, wobei zusätzlich eine Napfung im Kopfbereich erzeugt wird.

## Beschreibung

Die Erfindung betrifft eine Außensechsrundschraube und ein Verfahren zu deren Herstellung nach den Oberbegriffen des ersten und 12. Patentanspruchs. Der Schraubenkopf ist dabei im Wesentlichen in der Art eines Torx-Kopfes ausgebildet.
Nach US 4,239,834 ist ein Verfahren zur Herstellung einer Torx-Schraube bekannt, wobei die Formgebung des Kopfes durch Rückwärtsfließpressen erfolgt, und die Kontur des Fließpreßwerkzeuges das Außensechsrund erzeugt.
Das Verfahren hat jedoch den Nachteil, daß der Kopf vom vollständig ausgeformten Außensechsrundprofil in Richtung zum Flansch eine Fließpreßschräge aufweist, welche nicht zum Kraftangriff dient und die Kopfhöhe unnötig erhöht, so daß die Gesamtkopfhöhe mehr als das dreifache der Höhe des, den Kraftangriff gewährleistenden, Außensechsrundprofiles beträgt. Weiterhin sind teure Fließpreßwerkzeuge erforderlich.

Der Erfindung liegt die Aufgabe zugrunde, eine Außensechsrundschraube und ein Verfahren zu deren Herstellung zu entwickeln, wobei die Kopfhöhe unter Beibehaltung eines zuverlässigen Kraftangriffs wesentlich verringert und Material eingespart werden kann und es möglich ist, teure Fließpreßwerkzeuge einzusparen.

Diese Aufgabe wird mit den Merkmalen des 1. und 12. Patentanspruchs gelöst. Vorteilhafte Ausführungen ergeben sich aus den Unteransprüchen
Die Außensechsrundschraube ist in der Art einer Torx-Schraube, mit einem Kopf bestehend aus einem Flansch mit einem in Richtung zur Außensechsrundkontur reichenden Winkel und einer den Kraftangriff gewährleistenden Außensechsrundkontur ausgebildet. Erfindungsgemäß schließt sich der Flansch direkt an die Außensechsrundkontur an, wobei die Höhe des Kopfes wesentlich verringert ist und dennoch die Höhe des Außensechsrundprofiles einen zuverlässigen Kraftangriff gewährleistet.
Das Verhältnis von Gesamtkopfhöhe zur Höhe der Außensechsrundkontur kann dadurch wesentlich minimiert werden und beträgt nur noch 1,5 bis 2,5, vorzugsweise 2, d.h. die Gesamtkopfhöhe ist nur um das 1,5 bis 2,5-fache Höher als die Höhe der Außensechsrundkontur. Der Flansch weist dabei bevorzugt einen Winkel von im Wesentlichen 15° auf. In dem Kopf kann auch eine Napfung eingebracht sein, deren Tiefe in etwa 20 bis 50 % der Gesamtkopfhöhe betragen kann. Die Napfung kann in Form eines Innenprofiles ausgebildet sein, z.B. als Innensechsrund, Innensechskant oder Innenvielzahn. Die Wandstärke zwischen der Napfung und der Außensechskantkontur in Abhängigkeit von dem äußeren Hüllkreis des jeweiligen Innenprofils beträgt nicht mehr als 60% des äußeren Hüllkreises des Außensechsrundprofiles. Bei der Herstellung der Außensechsrundschraube mit einem Kopf bestehend aus einer den Kraftangriff gewährleistenden Außensechsrundkontur und einem Flansch mit einer in Richtung zur Außensechsrundkontur im Winkel reichenden Schräge, wird ein zylindrischer Rohling im Querschnitt reduziert. Weiterhin wird im späteren Kopfbereich eine Vorform des Kopfes erzeugt. Erfindungsgemäß erfolgt daß die Fertigstellung des Flansches und der Außensechsrundkontur entweder
- durch Anschaben mittels eines Anschabewerkzeuges oder
- durch Aufstauchen und Formpressen, wobei zusätzlich eine Napfung im Kopfbereich erzeugt wird.

Beim Anschaben wird durch einen Anschabestempel, welcher die Innenkontur entsprechend der zu erzeugenden Außensechsrundkontur und einer sich in Schabrichtung entsprechend des Winkels des zu erzeugenden Flansches erweiternden Kontur, aufweist, Werkstoff aus dem Bereich, welcher die Außensechsrundkontur bildet, in den Flanschbereich geschabt, wodurch der Flansch ausgeformt wird. Dabei greift an der Unterseite der Vorform des Kopfes ein Gegenwerkzeug an, in welchem beim Schaben die Unterseite des Flansches und dessen Außenkontur geformt werden. Anschließend kann, falls erforderlich, der Flansch an seinem Außendurchmesser beschnitten werden.

Es ist auch möglich, vor oder beim Schaben eine Napfung im vorgeformten Kopfbereich zu erzeugen. Wurde die Napfung vor dem Anschaben erzeugt, kann während des Schabens ein durch den Anschabestempel hindurchreichender Stempel in die Napfung eingreifen, so daß beim Anschaben kein Werkstoff in die vorher erzeugte Napfung fließen kann.
Durch kombiniertes Anschaben und Fließpressen kann auch gleichzeitig mit dem die Napfung erzeugenden Stempel und dem Anschabestempel der Kopf mit seiner Außenkontur und der Napfung geformt werden.
Der Stempel dient vorteilhafter Weise als Auswerfer. Bedarfsweise kann auch zusätzlich eine Abstreifhülse zum Auswerfen eingesetzt werden.

Mit der Erfindung wird eine Außensechsrundschraube geschaffen, die eine scharfkantige Kontur aufweist und bei einer geringen Kopfhöhe eine genügende Kraftangriffsfläche durch die im Verhältnis zur Kopfhöhe hohes Außensechsrundkontur gewährleistet. Die Standzeiten der Montagewerkzeuge werden durch die gut ausgeformte Kontur ebenfalls erhöht. Auch wird ein größerer Bauraum bei schwer zugänglichen Montagestellen frei und das Einsatzgewicht der Schraube minimiert. Dies ermöglicht wiederum höhere Füllmengen und somit geringere Kosten für Verpackung und Versand. Die Drehmomentenübertragbarkeit wird durch die scharfkantigere Kontur verbessert. Die Napfung mit Innenprofil kann zusätzlich zur Kraftübertragung verwendet werden und ermöglicht auch bei unzugänglichen Stellen eine sichere Montage.
Durch die Herstellung der Außensechsrundkontur mittels Anschaben werden teure Fließpreßwerkzeuge eingespart. Es wird eine sehr scharfkantige Kontur erzeugt, die Nachbearbeitung ausschließt oder auf ein Minimum reduziert. Die Verfahrenskombination in Form von Napfen, Aufstauchen und Formpressen, wobei gleichzeitig eine Napfung im Kopfbereich erzeugt wird, gewährleistet ebenfalls eine hohe Qualität des Kopfes, wobei z.B. Beschneiden vermieden wird.

Die Erfindung wird nachfolgend anhand von Ausführungsbeispielen und zugehörigen Zeichnungen näher erläutert.
Es zeigen:
- Fig. 1:: Darstellung der Außensechsrundschraube in Seitenansicht, ohne Napfung,
- Fig. 2:: Draufsicht gem. Fig. 1,
- Fig. 3:: Darstellung der Außensechsrundschraube in Seitenansicht, mit Napfung in Form eines Innensechsrundes,
- Fig. 4:: Draufsicht gem. Fig. 3,
- Fig. 5:: Angriff des Anschabestempels bei Beginn des Anschabevorganges im Längsschnitt,
- Fig. 6:: Angriff des Anschabestempels nach Beendigung des Anschabevorganges im Längsschnitt,
- Fig. 7:: Anschaben unter Verwendung eines Stempels für die Napfung.

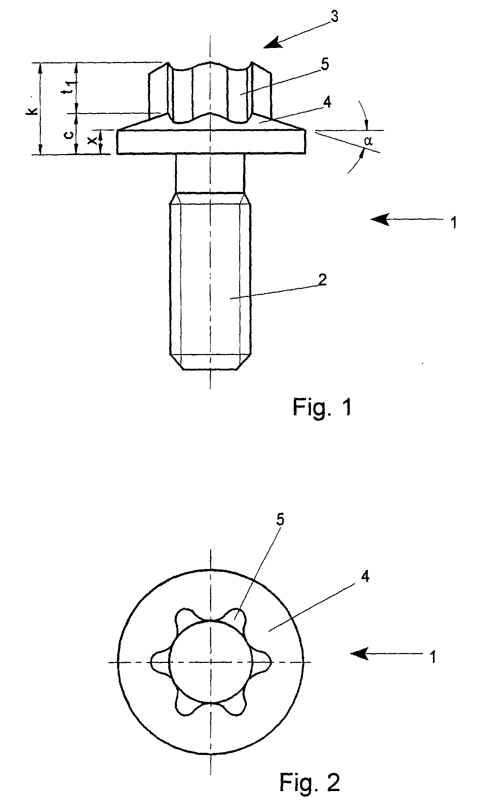

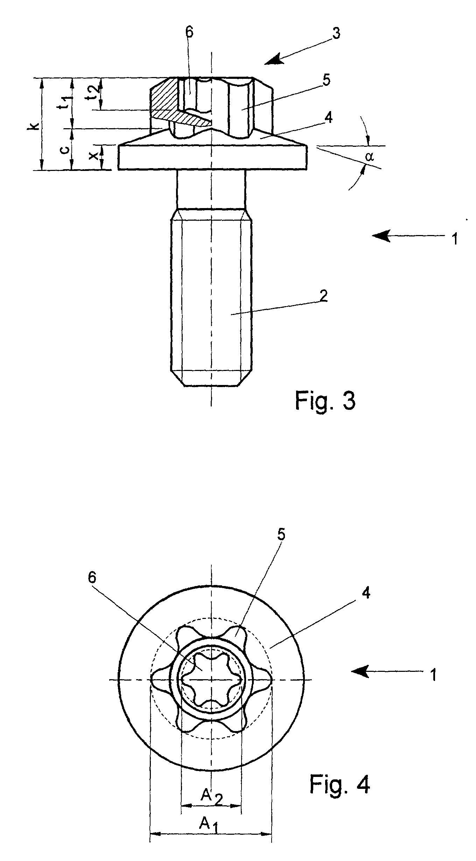

In Fig. 1 und 2 ist die erfindungsgemäße Außensechsrundschraube in der Seitenansicht und in der Draufsicht dargestellt. An den Schraubenschaft 2 schließt sich der Kopf 3 an, der einen Flansch 4 und einen Bereich mit einer Außensechsrundkontur 5 für den Kraftangriff aufweist. Der Flansch 4 geht mit seiner Schräge 4.1 im Winkel ∝ in den Bereich des Außensechsrundprofils 5 über. Der Winkel ∝ beträgt im dargestellten Fall 15°. Der Kopf 3 weist eine Gesamtkopfhöhe k auf, die sich im Wesentlichen aus der Kraftangriffshöhe t₁ der Außensechsrundkontur 5 und aus der maximalen Höhe c des Flansches 4 zusammensetzt. Der Flansch 4 weist einen zylindrischen Bereich mit der Höhe x auf.
Der Flansch 4 schließt mit seiner Schräge 4.1 im Winkel ∝ unmittelbar an die Außensechsrundkontur 5 an.
Gem. Fig. 3 und 4 ist im Schraubenkopf 3 eine Napfung 6 in Form eines Innensechsrundes angeordnet. Dieses ist analog zur Kontur des Außensechsrundprofiles ausgerichtet. Die Tiefe t₂ des Innensechsrundes 6 beträgt ca. 40% der Höhe k des Kopfes 3. Die Wandstärke zwischen der Napfung und der Außensechsrundkontur sollte in Abhängigkeit von dem äußeren Hüllkreis des jeweiligen Innenprofils nicht mehr als 60% des äußeren Hüllkreises des Außensechsrundprofiles betragen.

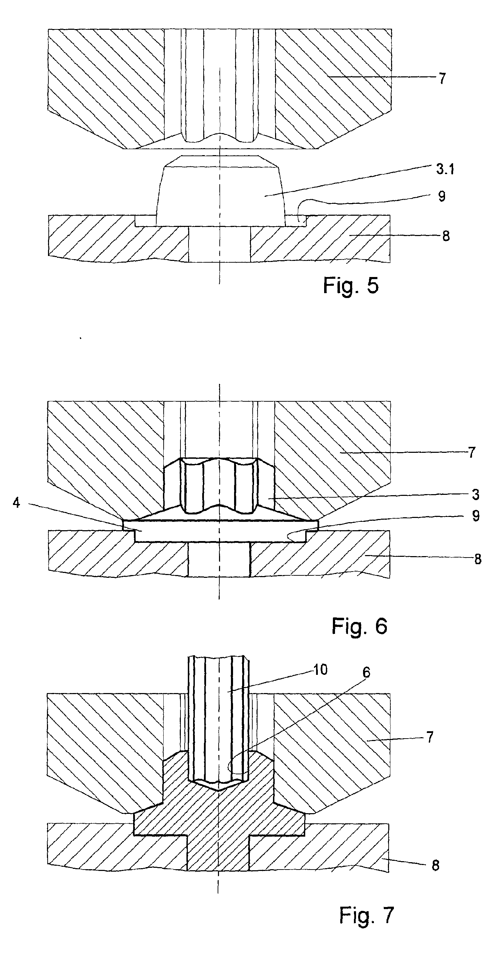

Der Angriff des Anschabestempels 7 bei Beginn und nach Beendigung des Anschabevorganges im Längsschnitt, ist in Fig. 5 und 6 dargestellt. An der Unterseite der Vorform 3.1 des Kopfes greift ein Gegenwerkzeug 8 mit einer Vertiefung 9 an, in welcher beim Anschaben die Rückseite des Flansches und dessen Außendurchmesser geformt werden. Abschließend erfolgt ein Beschneiden des Flansches 4.

Wurde vor dem Anschaben eine Napfung 6 erzeugt, greift in diese beim Anschaben ein Stempel 10 ein, welcher durch den Anschabestempel 7 hindurch reicht (Fig. 7). Damit wird vermieden, das beim Anschaben Werkstoff in die Napfung 6 fließt.
Alternativ ist es auch möglich, beim Anschaben gleichzeitig mit dem Stempel die Napfung auszuformen. Der Stempel kann dabei gleichzeitig als Auswerfer dienen. Anstelle des Stempels kann auch eine Abstreifhülse zum Auswerfen eingesetzt werden.
Gemäß einer nicht dargestellten Ausführungsvariante ist es auch möglich, den Schraubenkopf mit Außensechsrund, Innenkontur und Flansch auch durch die Verfahrenskombination Aufstauchen, Formpressen und Napfen zu erzeugen.

## Patentansprüche

1. Außensechsrundschraube in der Art einer Torx-Schraube, mit einem Kopf (3), bestehend aus einer den Kraftangriff gewährleistenden Außensechsrundkontur (5) und einem Flansch (4) mit einer im Winkel (∝) in Richtung zur Außensechsrundkontur (5) reichenden Schräge (4.1), **dadurch gekennzeichnet, daß** die Schräge (4.1) des Flansches (4) direkt an die Außensechsrundkontur (5) anschließt, daß die Gesamtkopfhöhe (k) des Kopfes (3) wesentlich verringert ist, wobei gleichzeitig die Höhe (t₁) der Außensechsrundkontur (5) einen zuverlässigen Kraftangriff gewährleistet.

2. Außensechsrundschraube nach Anspruch 1, **dadurch gekennzeichnet, daß** die Schräge (4.1) des Flansches (4) in Richtung zur Außensechsrundkontur (5) einen Winkel (∝) von 12° bis 18° aufweist.

3. Außensechsrundschraube nach Anspruch 1 und 2, **dadurch gekennzeichnet, daß** die Schräge (4.1) des Flansches (4) einen Winkel (∝) von im wesentlichen 15° aufweist.

4. Außensechsrundschraube nach einem oder mehreren der Ansprüche 1 bis 3, **dadurch gekennzeichnet, daß** das Verhältnis von Gesamtkopfhöhe (k) zur Höhe (t₁) des Außensechsrundprofiles (5) 1,5 bis 2,5 beträgt.

5. Außensechsrundschraube nach Anspruch 4, **dadurch gekennzeichnet, daß** das Verhältnis von Gesamtkopfhöhe (k) zur Höhe (t₁) des Außensechsrundprofiles (5) in etwa 2 beträgt.

6. Außensechsrundschraube nach einem oder mehreren der Ansprüche von 1 bis 5, **dadurch gekennzeichnet, daß** der Kopf eine Napfung (6) aufweist.

7. Außensechsrundschraube nach einem oder mehreren der Ansprüche von 1 bis 6, **dadurch gekennzeichnet, daß** die Tiefe der Napfung (6) 20% bis 50 % der Gesamtkopfhöhe (k) beträgt.

8. Außensechsrundschraube nach Anspruch 7, **dadurch gekennzeichnet, daß** die Napfung (6) in Form eines Innenprofiles ausgebildet ist.

9. Außensechsrundschraube nach Anspruch 7 oder 8, **dadurch gekennzeichnet, daß** die Napfung (6) in Form eines Innensechsrundprofiles ausgebildet ist.

10. Außensechsrundschraube nach Anspruch 7 oder 8, **dadurch gekennzeichnet, daß** die Napfung (6) in Form eines Innensechskantes ausgebildet ist.

11. Außensechsrundschraube nach Anspruch 7 oder 8, **dadurch gekennzeichnet, daß** die Napfung (6) in Form eines Innenvielzahns ausgebildet ist.

12. Außensechsrundschraube nach einem oder mehreren der Ansprüche 7 bis 11, **dadurch gekennzeichnet, daß** die Wandstärke zwischen der Napfung (6) und dem Außensechskantprofil (5) in Abhängigkeit von dem äußeren Hüllkreis (A1) des jeweiligen Innenprofils (6) nicht mehr als 60% des äußeren Hüllkreises (A2) des Außensechsrundprofiles (5) beträgt.

13. Verfahren zur Herstellung einer Außensechsrundschraube, insbesondere nach Anspruch 1, mit einem Kopf (3) bestehend aus einer den Kraftangriff gewährleistenden Außensechsrundkontur (5) und einem Flansch (4) mit einer in Richtung zur Außensechsrundkontur (5) im Winkel (∝) reichenden Schräge (4.1), wobei ein zylindrischer Rohling durch in seinem Querschnitt reduziert wird und im späteren Kopfbereich eine Vorform (3.1) des Kopfes (3) erzeugt wird, **dadurch gekennzeichnet, daß** die Fertigstellung des Flansches (4) und der Außensechsrundkontur (5) entweder
- durch Anschaben mittels eines Anschabewerkzeuges oder
- durch Aufstauchen und Formpressen, wobei zusätzlich eine Napfung im Kopfbereich erzeugt wird,
erfolgt.

14. Verfahren nach Anspruch 13, **dadurch gekennzeichnet, daß** durch einen Anschabestempel (7) mit der Innenkontur entsprechend der zu erzeugenden Außensechsrundkontur (5) und mit einer sich in Anschaberichtung entsprechend des Winkels (∝) des zu erzeugenden Flansches (4) erweiternden Kontur, Werkstoff aus dem Bereich, welcher die Außensechsrundkontur bildet, in den Flanschbereich geschabt wird und den Flansch (4) formt und daß an der Unterseite der Vorform (3.1) des Kopfes (3) ein, eine Vertiefung (9) enthaltendes, Gegenwerkzeug (8) angreift, in dessen Vertiefung (9) beim Anschaben die Unterseite des Flansches (4) und dessen Außenkontur geformt werden und daß bedarfsweise der zylindrische Bereich des Flansches (4) durch abschließendes Abgraten erzeugt wird.

15. Verfahren nach Anspruch 13 oder 14, **dadurch gekennzeichnet, daß** vor oder beim Anschaben eine Napfung (6) im Kopfbereich erzeugt wird.

16. Verfahren nach Anspruch 15, **dadurch gekennzeichnet, daß**, während des Anschabens durch den Anschabestempel (7) hindurch ein, der Napfung (6) entsprechender, Stempel (10) die in die Napfung (6) eingreift oder die Napfung (6) erzeugt.

17. Verfahren nach Anspruch 15 oder 16, **dadurch gekennzeichnet, daß** der Stempel (10) als Auswerfer zum Lösen des Kopfes (3) vom Anschabestempel (7) dient.

18. Verfahren nach einem oder mehreren der Ansprüche von 13 bis 17, **dadurch gekennzeichnet, daß** eine Abstreifhülse zum Auswerfen dient.
